# EUROPÄISCHE PATENTSCHRIFT

(11) **EP 4 565 776 B1**
(45) Veröffentlichungstag und Bekanntmachung des Hinweises auf die Patenterteilung: **10.06.2026**
(21) Anmeldenummer: 24762261.6
(22) Anmeldetag: 22.08.2024
(51) Int. Cl.: F01N 3/025, F01N 3/20, F01N 13/08, F01N 13/18

(54) **ANSCHLUSSEINHEIT**
CONNECTION UNIT
UNITÉ DE RACCORDEMENT

(30) Priorität: 22.08.2023 DE 102023122361
(43) Veröffentlichungstag der Anmeldung: 11.06.2025
(73) Patentinhaber: Purem GmbH, 66539 Neunkirchen (DE)
(72) Erfinder: HÄBERLE, Jürgen, 70372 Stuttgart (DE); KARCH, Adam, 73230 Kirchheim unter Teck (DE); KRAUSE, Michael, 73733 Esslingen (DE); KAREKAR, Amol Anil, 73730 Esslingen (DE)
(74) Vertreter: Ruttensperger Lachnit Trossin Gomoll
(86) Internationale Anmeldenummer: PCT/EP2024/073521
(87) Internationale Veröffentlichungsnummer: WO 2025/040740

(56) Entgegenhaltungen:
- DE-A1- 102010 049 018
- DE-A1- 102022 116 939
- DE-A1- 4 307 525
- US-A1- 2010 212 292
- US-A1- 2016 032 808

## Beschreibung

Die vorliegende Erfindung betrifft eine Anschlusseinheit zum Anschließen einer Heizgas-Erzeugungsanordnung zur Erzeugung von in einen Abgasströmungskanal in einer Abgasführungskomponente einer Abgasanlage für eine Brennkraftmaschine einzuleitendem Heizgas an die Abgasführungskomponente.

Zur Minderung des Schadstoffanteils in dem von einer Brennkraftmaschine ausgestoßenen Abgas werden in derartigen Abgasanlagen Abgasbehandlungseinheiten, wie zum Beispiel Katalysatoren, Partikelfilter und dergleichen, eingesetzt. Der Behandlungsprozess umfasst im Allgemeinen eine katalytische Reaktion, für deren Durchführung das Katalysatormaterial einer derartigen Abgasbehandlungseinheit auf eine im Allgemeinen im Bereich von einigen 100°C liegende Betriebstemperatur gebracht werden muss. Um insbesondere in der Startphase des Arbeitsbetriebs einer Brennkraftmaschine, in welcher das von der Brennkraftmaschine ausgestoßene Abgas eine vergleichsweise niedrige Temperatur aufweist und die verschiedenen Systembereiche einer Abgasanlage ebenfalls eine vergleichsweise niedrige Temperatur aufweisen, die Zeitdauer, in welcher die Durchführung einer katalytischen Reaktion in einer Abgasbehandlungseinheit aufgrund zu niedriger Temperatur nicht erfolgen kann, möglichst kurz zu halten, ist es bekannt, derartigen Abgasbehandlungseinheiten Heizeinheiten zuzuordnen. Diese können beispielsweise elektrisch betrieben sein, um auf das von der Brennkraftmaschine ausgestoßene Abgas oder in die Abgasanlage eingeleitete Luft Wärme zu übertragen und diese Wärme auf eine oder mehrere weiter stromabwärts positionierte Abgasbehandlungseinheiten zu übertragen.

Bei einer alternativen Ausgestaltungsart einer Heizeinheit kann diese als Heizgas-Erzeugungsanordnung ausgebildet sein, welche in einer exothermen Reaktion, im Allgemeinen also einem Verbrennungsprozess bzw. Oxidationsprozess, ein als Heizgas genutztes Abgas erzeugt. Dieses kann in einer Abgasanlage durch eine oder mehrere Abgasbehandlungseinheiten hindurch geleitet werden, um die im Heizgas transportierte Wärme zum Erwärmen derartiger Abgasbehandlungseinheiten zu nutzen. Da das in einer derartigen Heizgas-Erzeugungsanordnung generierte Heizgas eine Temperatur von deutlich mehr als 1000 °C aufweisen kann, kann eine sehr schnelle Erwärmung einer Abgasbehandlungseinheit auf die zur Durchführung der Abgasreinigungsreaktion erforderliche Temperatur erreicht werden.

Eine Abgasanlage für einen Zweitaktmotor mit einer Heizgas-Erzeugungsanordnung zum Einleiten von Heizgas in den Abgasstrom einer Brennkraftmaschine ist aus der DE 90 14 66 U1 bekannt. Eine Anschlusseinheit, durch welche die Heizgas-Erzeugungsanordnung an eine Abgasführungskomponente der Abgasanlage angebunden ist, umfasst einen rohrartigen, gekrümmten Anschlusseinheitkörper, der in einem seiner Endbereiche an ein eine Abgasführungskomponente bereitstellendes Abgasrohr, welches auch einen Einlass für einen stromabwärts folgenden Katalysator bildet, durch Verschweißen angebunden ist und in seinem anderen Endbereich die einen Brenner umfassende Heizgas-Erzeugungsanordnung trägt.

Bei einer aus der nachveröffentlichten deutschen Patentanmeldung DE 10 2022 116 939.1 bekannten Abgasanlage für eine Brennkraftmaschine ist eine zum Anschließen einer Heizgas-Erzeugungsanordnung an eine Abgasführungskomponente der Abgasanlage vorgesehene Anschlusseinheit aus zwei Bauteilen zusammengesetzt. Ein als Blechumformteil ausgebildetes Bauteil der Anschlusseinheit stellt einen Befestigungsbereich bereit, mit welchem die Anschlusseinheit durch Verschweißung fest an eine Abgasführungskomponente der Abgasanlage angebunden ist. Ein als Metallgussteil ausgebildetes Bauteil der Anschlusseinheit stellt den Anschlussbereich bereit, in welchem eine Heizgas-Erzeugungsanordnung an die Anschlusseinheit angeschlossen werden kann. Die beiden Bauteile der Anschlusseinheit sind in im Wesentlichen zylindrisch geformten, einander überlappend angeordneten Verbindungsbereichen durch Verschweißung fest miteinander verbunden.

Die US 2010/0212292 A1 offenbart eine Abgasanlage, bei welcher in einem Krümmungsbereich eines Abgasrohrs eine zum Anschließen eines Injektors zum Einleiten eines Reduktionsmittels in einen Abgasstrom ausgebildete Anschlusseinheit vorgesehen ist. Die Anschlusseinheit weist einen einstückig ausgebildeten Anschlusseinheitkörper auf, der in einem mit dem Injektor zu verbindenden Endbereich einer Umfangswand desselben einen bezüglich einer Anschlusseinheitkörper-Mittenachse nach radial außen hervorstehenden Anschlussflansch aufweist. In dem anderen Endbereich der Umfangswand weist der Anschlusseinheitkörper einen Anschlussbereich auf, in welchem die Umfangswand an das Abgasrohr angebunden ist. Die Form des Anschlussbereichs ist an die gekrümmte Struktur des Abgasrohrs in dem Krümmungsbereich angepasst. Nahe dem den Anschlussflansch aufweisenden Endbereich der Umfangswand ist an dieser ein als separate Komponente ausgebildetes und sich trichterartig erweiterndes Reduktionsmittel-Einleitrohr festgelegt.

Es ist die Aufgabe der vorliegenden Erfindung, eine unter starker mechanischer und thermischer Belastung stabile Anschlusseinheit zum Anschließen einer Heizgas-Erzeugungsanordnung zur Erzeugung von in einen Abgasströmungskanal in einer Abgasführungskomponente einer Abgasanlage für eine Brennkraftmaschine einzuleitendem Heizgas an die Abgasführungskomponente vorzusehen.

Erfindungsgemäß wird diese Aufgabe gelöst durch eine Anschlusseinheit zum Anschließen einer Heizgas-Erzeugungsanordnung zur Erzeugung von in einen Abgasströmungskanal in einer Abgasführungskomponente einer Abgasanlage für eine Brennkraftmaschine einzuleitendem Heizgas an die Abgasführungskomponente, umfassend einen mit
- einer einen Heizgas-Strömungskanal umgebenden Umfangswand,
- einem an einer Komponentenwand der Abgasführungskomponente zu befestigenden Befestigungsbereich und
- einem Anschlussbereich zum Anschließen der Heizgas-Erzeugungsanordnung an die Anschlusseinheit
einstückig ausgebildeten Anschlusseinheitkörper, wobei der Befestigungsbereich einen von der Umfangswand bezüglich einer Anschlusseinheitkörper-Mittenachse nach radial außen hervorstehenden Befestigungsflansch mit einer daran ausgebildeten ringförmigen Befestigungsfläche umfasst und der Anschlussbereich einen von der Umfangswand bezüglich der Anschlusseinheitkörper-Mittenachse nach radial außen hervorstehenden Anschlussflansch mit einer daran ausgebildeten ringförmigen Anschlussfläche umfasst.

Eine definierte Einleitung des Heizgases in den Abgasstrom bei gleichzeitig reduzierter thermischer Belastung wird dadurch erreicht, dass an dem Anschlusseinheitkörper ein an die Umfangswand anschließendes oder/und von der Umfangswand wenigstens bereichsweise umgebenes, den Heizgas-Strömungskanal wenigstens bereichsweise bereitstellendes Heizgas-Einleitrohr vorgesehen ist.

Dabei wird ein einfach strukturierter, stabiler Aufbau dadurch erreicht, dass der Anschlusseinheitkörper mit dem Heizgas-Einleitrohr einstückig ausgebildet ist.

Dies bedeutet also, dass im Wesentlichen alle Bestandteile des Anschlusseinheitkörpers, also die Umfangswand, der Befestigungsbereich, der Anschlussbereich und das Heizgas-Einleitrohr, als ein in sich integral strukturierter Materialblock bereitgestellt sind.

Die erfindungsgemäß aufgebaute Anschlusseinheit vermeidet mit ihrem einstückig ausgebildeten Anschlusseinheitkörper die Notwendigkeit, den Befestigungsbereich einerseits und den Anschlussbereich andererseits bereitstellende separate Bauteile zu dem Anschlusseinheitkörper zusammenzusetzen. Dies erhöht die Stabilität der Anschlusseinheit und vermeidet die Gefahr, dass durch starke mechanische bzw. thermische Belastung ein Schaden im Bereich einer derartigen Verbindung separater Bauteile entsteht. Da sowohl im Befestigungsbereich, als auch im Anschlussbereich jeweilige der Befestigung bzw. des Anschlusses dienende Flächen an diesen Bereichen zugeordneten Flanschen ausgebildet sind, wird eine großflächige und die auftretenden Belastungen gleichmäßig verteilende Anbindung der Anschlusseinheit sowohl im Befestigungsbereich an eine Abgasführungskomponente, als auch im Anschlussbereich an die Heizgas-Erzeugungsanordnung erreicht. Insbesondere die Anbindung an die Heizgas-Erzeugungsanordnung vermittels des Anschlussflansches kann unter Verwendung einer auch als V-Band bezeichneten Verbindungsschelle oder dergleichen in einfacher, kostengünstiger, gleichwohl jedoch sehr stabiler Art und Weise reversibel erfolgen.

Es ist darauf hinzuweisen, dass im Sinne der vorliegenden Erfindung mit dem Ausdruck "einstückig" ausgesagt ist, dass die in diesem Zusammenhang angesprochenen Bestandteile als ein Materialblock und nicht durch das Zusammenfügen separater Komponenten hergestellt werden. Dies kann beispielsweise dadurch realisiert sein, dass der Anschlusseinheitkörper als Metallgusskörper ausgebildet ist. Die Ausgestaltung des Anschlusseinheitkörpers als Metallgusskörper führt zu dem weiteren Vorteil, dass der Anschlusseinheitkörper insbesondere auch in seinem zur Anbindung an die Abgasführungskomponente vorgesehenen Befestigungsbereich deutlich stabiler ausgebildet ist, als beispielsweise ein Blechumformteil.

Wenn die Anschlussfläche bezüglich der Anschlusseinheitkörper-Mittenachse in einem stromaufwärtigen Endbereich des Heizgas-Strömungskanals im Wesentlichen orthogonal angeordnet ist, ermöglicht dies in einfacher Weise die Anbindung der Anschlusseinheit im Anschlussbereich an einen entsprechend geformten Anschlussflansch der Heizgas-Erzeugungsanordnung.

Wenn die Befestigungsfläche bezüglich der Anschlusseinheitkörper-Mittenachse im stromaufwärtigen Endbereich des Heizgas-Strömungskanals unter einem von 90° verschiedenen Winkel geneigt ist, wird insbesondere unter Berücksichtigung der vorangehend angesprochenen Orientierung der Anschlussfläche eine zueinander angewinkelte Orientierung dieser beiden Flächen erreicht, was zum Erhalt einer kompakten Ausgestaltung einer mit einer derartigen Anschlusseinheit und einer Heizgas-Erzeugungsanordnung aufgebauten Abgasanlage beiträgt. Ferner kann durch die somit eingeführte Anwinkelung und die damit auch einhergehende Orientierung des Heizgas-Strömungskanals auch eine die Durchmischung von Heizgas und Abgas unterstützende Einleitung des Heizgases in den Abgasstrom in der Abgasführungskomponente erreicht werden.

Bei einer vorteilhaften Ausgestaltungsform kann vorgesehen sein, dass die Anschlussfläche im Wesentlichen in einer Ebene liegt, oder/und dass die Befestigungsfläche im Wesentlichen in einer Ebene liegt. **In** diesem Falle ist die jeweilige Fläche als im Wesentlichen ungekrümmte Fläche ausgebildet, was einerseits die Herstellung des diese bereitstellenden Anschlusseinheitkörpers und der mit diesem zu verbindenden Komponenten und andererseits auch den Vorgang zum Verbinden des Anschlusseinheitkörpers mit diesen Komponenten erleichtert.

Um sowohl die thermische, als auch die mechanische Belastung im Bereich der Befestigung des Anschlusseinheitkörpers an eine Abgasführungskomponente möglichst gering zu halten, wird vorgeschlagen, dass ein Radialabstand der Umfangswand zu der Anschlusseinheit-Mittenachse von dem Anschlussflansch in Richtung zu dem Befestigungsflansch zunimmt, oder/und dass die Anschlussfläche kleiner ist als die Befestigungsfläche. Da im Bereich der Befestigungsfläche bzw. des diese aufweisenden Befestigungsflansches einerseits die von der Heizgas-Erzeugungsanordnung ausgeübte mechanische Belastung auf die Abgasführungskomponente übertragen wird und andererseits eine vergleichsweise starke thermische Belastung insbesondere durch das Heizgas auftreten kann, ist es besonders vorteilhaft, mit der Zunahme der Abmessung der Umfangswand bzw. der größer dimensionierten Befestigungsfläche im Bereich der Anbindung der Anschlusseinheit an die Abgasführungskomponente eine möglichst großflächige Lastverteilung einzuführen.

Zur Abgabe des Heizgases in einer die Durchmischung mit dem Abgas unterstützenden Art und Weise kann in dem Heizgas-Einleitrohr eine Mehrzahl von Heizgas-Abgabeöffnungen ausgebildet sein.

Die Erfindung betrifft ferner eine Abgasanlage für eine Brennkraftmaschine, umfassend:
- eine Abgasführungskomponente mit einer einen von Brennkraftmaschinenabgas durchströmbaren Abgasströmungskanal umgrenzenden Komponentenwand,
- eine Heizgas-Erzeugungsanordnung zur Erzeugung von in den Abgasströmungskanal einzuleitendem Heizgas,
- eine erfindungsgemäß aufgebaute Anschlusseinheit zum Anschließen der Heizgas-Erzeugungsanordnung an die Komponentenwand derart, dass von der Heizgas-Erzeugungsanordnung erzeugtes Heizgas durch die Anschlusseinheit in den Abgasströmungskanal strömt.

Für eine stabile Abstützung der Anschlusseinheit an der Komponentenwand wird vorgeschlagen, dass der Befestigungsbereich mit seiner Befestigungsfläche einen eine Heizgas-Einleitöffnung in der Komponentenwand umgebenden Öffnungsrandbereich der Komponentenwand überdeckend angeordnet ist.

Die feste Verbindung der Anschlusseinheit mit der Abgasführungskomponente bzw. Komponentenwand derselben kann beispielsweise dadurch erreicht werden, dass der Befestigungsflansch mit der Komponentenwand durch Materialschluss, vorzugsweise Verschweißen, verbunden ist.

Die Komponentenwand kann beispielsweise ein Stahlblech-Umformteil umfassen, wie diese auch aus Kostengründen üblicherweise für Abgasführungskomponenten in Abgasanlagen eingesetzt werden.

Beispielsweise kann die Abgasführungskomponente ein Umlenkgehäuse zum Umlenken eines den Abgasströmungskanal durchströmenden Abgasstroms zwischen einem stromaufwärtigen Anschlussbereich und einem stromabwärtigen Anschlussbereich desselben bereitstellen. Um in der Abgasanlage auch die Funktionalität der Abgasreinigung realisieren zu können, kann dabei weiter vorgesehen sein, dass die Abgasführungskomponente in dem stromaufwärtigen Anschlussbereich an eine stromaufwärtige Abgasbehandlungseinheit angeschlossen ist und in dem stromabwärtigen Anschlussbereich an eine stromabwärtige Abgasbehandlungseinheit angeschlossen ist.

Die vorliegende Erfindung wird nachfolgend mit Bezug auf die beiliegenden Figuren detailliert beschrieben. Es zeigt:
- Fig. 1: in prinzipieller Darstellung eine Abgasanlage mit einer Heizgas-Erzeugungsanordnung und einer diese an eine Abgasführungskomponente anschließenden Anschlusseinheit;
- Fig. 2: eine perspektivische Darstellung der Abgasführungskomponente mit der daran vorgesehenen Anschlusseinheit,
- Fig. 3: eine Schnittdarstellung der Abgasführungskomponente mit der daran vorgesehenen Anschlusseinheit;
- Fig. 4: eine Seitenansicht der Anschlusseinheit;
- Fig. 5: eine Längsschnittansicht der Anschlusseinheit.

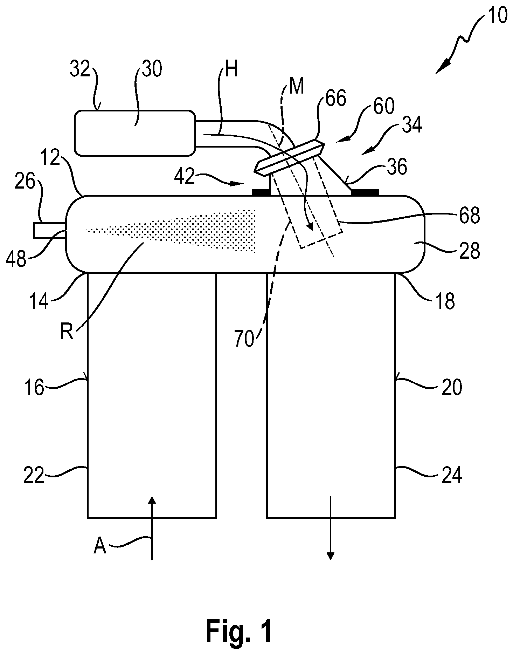

In Fig. 1 ist in prinzipieller Art und Weise eine Abgasanlage 10 bzw. ein Teil einer derartigen Abgasanlage 10 dargestellt, in welcher das von einer Brennkraftmaschine ausgestoßene Brennkraftmaschinenabgas A strömt. Im dargestellten Ausgestaltungsbeispiel umfasst die Abgasanlage 10 eine als Umlenkgehäuse ausgebildete Abgasführungskomponente 12, in welcher, wie die Fig. 1 dies veranschaulicht, der Strom von Brennkraftmaschinenabgas A um etwa 180° umgelenkt wird. In einem stromaufwärtigen Anschlussbereich 14 der Abgasführungskomponente 12 schließt an diese eine stromaufwärtige Abgasbehandlungseinheit 16 an. In einem stromabwärtigen Anschlussbereich 18 der Abgasführungskomponente 12 schließt an diese eine stromabwärtige Abgasbehandlungseinheit 20 an.

Beispielsweise kann die stromaufwärtige Abgasbehandlungseinheit 16 einen in einem rohrartigen Abgasbehandlungseinheitgehäuse 22 getragenen Katalysator, wie z. B. Oxidationskatalysator, oder/und einen Partikelfilter umfassen. Die stromabwärtige Abasbehandlungseinheit 20 kann beispielsweise einen oder mehrere in einem Abgasbehandlungseinheitgehäuse 24 getragenen Katalysatoren, beispielsweise SCR-Katalysatoren, umfassen. In diesem Falle kann beispielsweise im Bereich der ein Umlenkgehäuse bereitstellenden Abgasführungskomponente 12 ein Injektor 26 vorgesehen sein, welcher ein Reaktionsmittel R, beispielsweise eine Harnstoff/Wasser-Lösung, in den in der Abgasführungskomponente 12 bereitgestellten Abgasströmungskanal 28 abgibt. Das Reaktionsmittel R durchmischt sich mit dem Brennkraftmaschinenabgas A und strömt zusammen mit dem Brennkraftmaschinenabgas A in Richtung zu der stromabwärtigen Abgasbehandlungseinheit 20 zur Durchführung der zur Verringerung des Stickoxidanteils führenden selektiven katalytischen Reduktion.

Die Abgasanlage 10 umfasst ferner eine einen Brenner 30 umfassende Heizgas-Erzeugungsanordnung 32. Der Brenner 30 wird mit Verbrennungsluft und Brennstoff, beispielsweise Diesel oder Benzin, gespeist. Bei der Verbrennung, also einer exothermen Reaktion, wird Verbrennungsabgas erzeugt, welches als Heizgas H über eine Anschlusseinheit 34 in den in der Abgasführungskomponente 12 bereitgestellten Abgasströmungskanal 28 eingeleitet wird. Das Heizgas H kann eine Temperatur von bis zu 1200°C aufweisen und somit zu einer sehr schnellen Erwärmung der stromabwärts folgenden Systembereiche der Abgasanlage 10, insbesondere der stromabwärtigen Abgasbehandlungseinheit 20, beitragen.

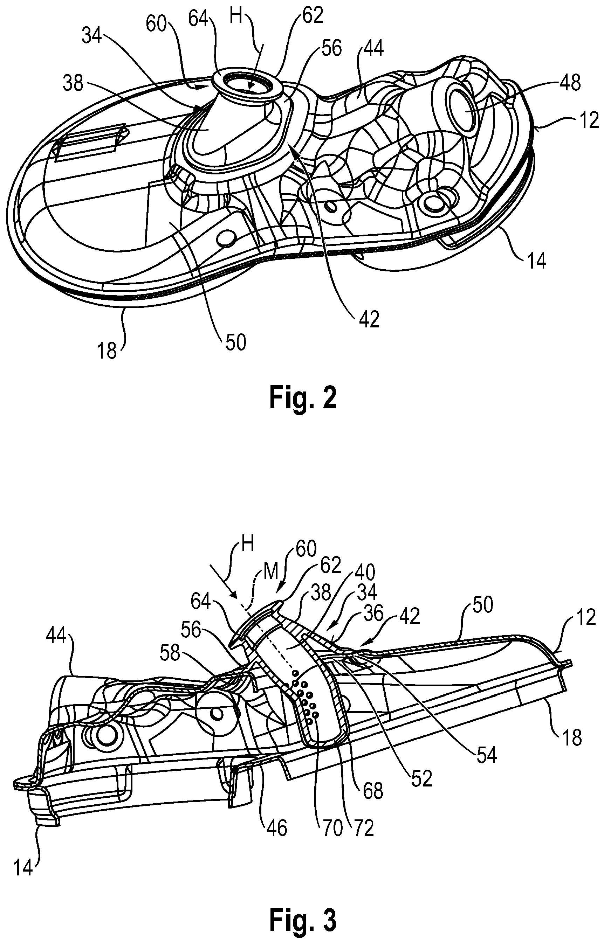

Mit Bezug auf die Fig. 2 und 3 wird nachfolgend insbesondere der Aufbau der Anschlusseinheit 34 beschrieben, welche einerseits aufgrund der sehr hohen Temperatur des Heizgases H einer starken thermischen Belastung unterliegt und andererseits aufgrund der durch diese bereitgestellten mechanischen Ankopplung der Heizgas-Erzeugungsanordnung 32 an die Abgasführungskomponente 12 auch einer starken mechanischen Belastung unterliegt.

In den Fig. 2 und 3 ist veranschaulicht, dass die Anschlusseinheit 34 einstückig, also als ein Materialblock, beispielsweise in einem Gussverfahren als Metallgussteil hergestellt ist. Ein Anschlusseinheitkörper 36 der Anschlusseinheit 34 umfasst eine Umfangswand 38, welche im Wesentlichen in Richtung einer Anschlusseinheitkörper-Mittenachse M langgestreckt ist und einen Heizgas-Strömungskanal 40 umgibt. In einem ihrer axialen Endbereiche geht die Umfangswand 38 über in einen Befestigungsbereich 42, mit welchem die Anschlusseinheit 34 an der Abgasführungskomponente 12 festgelegt ist.

Die Fig. 2 und 3 zeigen, dass die als Umlenkgehäuse ausgebildete Abgasführungskomponente 12 beispielsweise mit zwei als Blechumformteile ausgebildeten Gehäuseteilen 44, 46 aufgebaut sein kann. An dem Gehäuseteil 46 sind der stromaufwärtige Anschlussbereich 14 und der stromabwärtige Anschlussbereich 16 vorgesehen. An dem anderen Gehäuseteil 44 kann der Injektor 26 im Bereich einer dafür vorgesehenen Injektoröffnung 48 angebracht werden.

Das Gehäuseteil 44 stellt eine Komponentenwand 50 bereit, in welcher eine Heizgas-Einleitöffnung 52 ausgebildet ist. Die Heizgas-Einleitöffnung 52 ist von einem im Wesentlichen planar geformten, also in einer Ebene liegenden Öffnungsrandbereich 54 umgeben, auf welchem ein bezüglich der Umfangswand 38 nach radial außen hervorstehender Befestigungsflansch 56 des Befestigungsbereichs 42 mit einer Befestigungsfläche 58 aufliegt. Die Befestigungsfläche 58 umgibt die Anschlusseinheitkörper-Mittenachse M ringartig und liegt vorzugsweise ebenfalls im Wesentlichen in einer Ebene, ist also eine im Wesentlichen ungekrümmte Fläche, mit welcher der Befestigungsflansch 56 in Umfangsrichtung um die Heizgas-Einleitöffnung 52 ununterbrochen auf dem Öffnungsrandbereich 54 aufliegt. Eine feste Verbindung der Anschlusseinheit 34 mit dem Gehäuseteil 44 der Abgasführungskomponente 12 wird dadurch erreicht, dass eine den Befestigungsflansch 56 beispielsweise vollständig umgebende bzw. vollständig in Umfangsrichtung entlang des Befestigungsflansches 56 geführte Schweißverbindung erzeugt wird. Das Bereitstellen der Befestigungsfläche 58 einerseits und des Öffnungsrandbereichs 54 andererseits als im Wesentlichen ungekrümmte, in einer Ebene liegende Strukturen führt zu einer vergleichsweise leichten Herstellbarkeit insbesondere der Anschlusseinheit 34.

An ihrem von dem Befestigungsbereich 42 entfernten axialen Endbereich geht die Umfangswand 38 des Anschlusseinheitkörpers 36 in einem Anschlussbereich 60 in einen Anschlussflansch 62 über. Der Anschlussflansch 62 stellt eine die Anschlusseinheitkörper-Mittenachse M vollständig und ringartig umgebende Anschlussfläche 64 bereit. Die Anschlussfläche 64 ist vorzugsweise in einer zur Anschlusseinheitkörper-Mittenachse M orthogonalen Ebene angeordnet und ist somit gleichermaßen eine im Wesentlichen ungekrümmte Fläche, an welcher ein an der Heizgas-Erzeugungsanordnung 32 vorgesehener Gegen-Anschlussflansch 66 anliegend positioniert werden kann. Der Anschlussflansch 62 und der Gegen-Anschlussflansch 66 können zur stabilen Anbindung der Heizgas-Erzeugungsanordnung 32 durch eine als so genanntes V-Band ausgebildete und diese radial außen umgebende Verbindungsschelle fest und gasdicht miteinander verbunden werden. Der gasdichte Anschluss kann beispielsweise auch durch ein im Bereich der beiden Flansche 62, 66 positioniertes hitzebeständiges Dichtelement unterstützt werden.

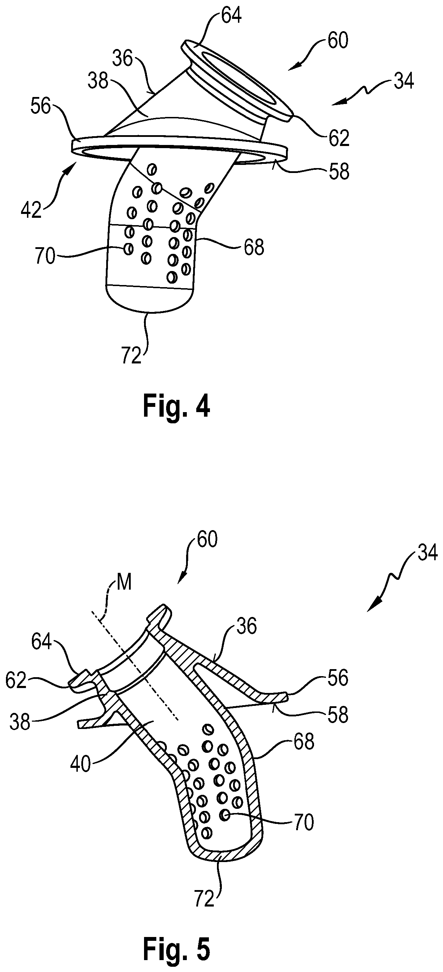

In Fig. 4 und 5 ist zu erkennen, dass der Befestigungsflansch 56 mit der daran vorgesehenen Befestigungsfläche 58 und der Anschlussflansch 62 mit der daran vorgesehenen Anschlussfläche 64 zueinander angewinkelt sind. Dies bedeutet, dass der Befestigungsflansch 56 bzw. die Befestigungsfläche 58 bezüglich der Anschlusseinheitkörper-Mittenachse unter einem von 90° verschiedenen Winkel geneigt angeordnet ist. Weiter ist zu erkennen, dass die Umfangswand 38 zwischen dem Anschlussflansch 62 und dem Befestigungsflansch 56 einen in Richtung stromabwärts, also auf den Befestigungsflansch 56 zu zunehmenden Abstand zur Anschlusseinheitkörper-Mittenachse M aufweist. Dies führt dazu, dass die Anschlussfläche 64 kleiner dimensioniert ist, als die mit größerem Abstand zur Anschlusseinheitkörper-Mittenachse M liegende Befestigungsfläche 58. Dies führt zu einer besseren Lastverteilung im Bereich der Anbindung der Anschlusseinheit 34 an die Komponentenwand 50 und gleichzeitig auch zu einer thermischen Entlastung.

Die Anschlusseinheit 34 umfasst ferner ein bei einer besonders bevorzugten Ausgestaltung ebenfalls einen integralen Bestandteil des Anschlusseinheitkörpers 36 bildendes Heizgas-Einleitrohr 68. Dieses schließt an die Umfangswand 38 in deren Erstreckungsbereich zwischen dem Anschlussflansch 62 und dem Befestigungsflansch 56 an und setzt den im Anschlusseinheitkörper 34 ausgebildeten Heizgas-Strömungskanal 40 fort. Der Heizgas-Strömungskanal 40 ist somit in seinem stromaufwärtigen Bereich im Wesentlichen direkt durch die Umfangswand 38 umgeben und begrenzt und ist in seinem im Heizgas-Einleitrohr 68 gebildeten stromabwärtigen Bereich zwar von der auch das Heizgas-Einleitrohr 68 umgebenden Umfangswandung 38 umgeben, von dieser aber nicht begrenzt. Beispielsweise in seinem über die Umfangswandung 38 sich hinaus erstreckenden Bereich kann das Heizgas-Einleitrohr 68 leicht abgekrümmt sein, was zu einer Struktur führt, bei welcher auch die Anschlusseinheitkörper-Mittenachse M einen grundsätzlich gekrümmten Verlauf aufweist.

Im Heizgas-Einleitrohr 68 ist eine Vielzahl von Heizgas-Abgabeöffnungen 70 ausgebildet, über welche das die Heizgas-Erzeugungsanordnung 32 als deren Abgas verlassende Heizgas H in den Abgasströmungskanal 28 im Inneren der Abgasführungskomponente 12 eintritt. Die Positionierung der Heizgas-Abgabeöffnungen 70 an dem Heizgas-Einleitrohr 68 ist vorzugsweise derart gewählt, dass eine effiziente und gleichmäßige Durchmischung von Heizgas H und Abgas A im Abgasströmungskanal 28 erreicht wird. Hierzu kann beispielsweise auch ein stromabwärtiges Ende des Heizgas-Einleitrohrs 68 vollständig oder im Wesentlichen vollständig durch eine Stirnwand 72 abgeschlossen sein, so dass gewährleistet ist, dass im Wesentlichen kein Heizgas H aus dem Heizgas-Einleitrohr 68 als vergleichsweise stark fokussierter, heißer Heizgasstrom abgegeben wird und als solcher in den stromabwärtigen Anschlussbereich 18 eintritt. Somit wird eine gleichmäßigere Anströmung der stromabwärtigen Abgasbehandlungseinheit 20 mit dem Heizgas H bzw. dem mit dem Heizgas H durchmischten Abgas A erreicht und eine lokale Überhitzung der stromabwärtigen Abgasbehandlungseinheit 20 vermieden.

Da das Heizgas H eine vergleichsweise hohe Temperatur von bis zu 1200°C aufweisen kann, ist die Anschlusseinheit 34 vorzugsweise aus einem bei derartig hohen Temperaturen stabilen und auch chemisch resistenten Material aufgebaut. Besonders geeignet ist hierfür Nickel enthaltendes Material, wie z. B. die unter der eingetragenen Marke Inconel vertriebene, auf Nickel basierende Legierung.

Die thermische Belastung insbesondere auch in demjenigen Bereich, in welchem die Anschlusseinheit 34 an die Abgasführungskomponente 12 anschließt wird bei dem erfindungsgemäßen Aufbau dadurch verringert, dass dieser Bereich der Anschlusseinheit 34, welcher im Wesentlichen durch den Befestigungsbereich 42 bzw. den Befestigungsflansch 56 bereitgestellt ist, aufgrund der sich radial erweiternden Struktur der Umfangswand 38 und aufgrund des Vorsehens des Heizgas-Einleitrohrs 68 nicht oder nur in geringem Ausmaß direkt von dem vergleichsweise heißen Heizgas H beaufschlagt wird. In diesem Bereich wird das Heizgas H in deutlichem Abstand von der Befestigungsfläche 58 bzw. dem Öffnungsrandbereich 54 geführt, so dass auch die in diesem Bereich gebildete Schweißverbindung zwischen der Anschlusseinheit 34 und der zumindest in diesem Bereich vorzugsweise als Blechumformteil ausgebildeten Abgasführungskomponente 12 einer übermäßig starken thermischen Belastung nicht ausgesetzt ist. Gleichzeitig werden die in diesem Bereich zwischen der Anschlusseinheit 34 und der Abgasführungskomponente 12 zu übertragenden Kräfte auf einen vergleichsweise groß dimensionierten Bereich verteilt, wodurch die beispielsweise auch durch das Eigengewicht der Heizgas-Erzeugungsanordnung 32 generierte und über den Anschlussbereich 60 auf die Anschlusseinheit 34 ausgeübte Belastung über einen größeren Oberflächenbereichs in die Abgasführungskomponente 12 eingeleitet wird und somit auch eine mechanische Überlastung in diesem Bereich vermieden wird.

Es ist abschließend darauf hinzuweisen, dass die Prinzipien der vorliegenden Erfindung auch Anwendung finden können, wenn die Abgasführungskomponente anders strukturiert, beispielsweise rohrartig ausgebildet ist und die räumliche Zuordnung von Abgasbehandlungseinheiten zur Anschlusseinheit anders gewählt ist, als in dem in Fig. 1 dargestellten Ausgestaltungsbeispiel veranschaulicht. Beispielsweise könnte die Einleitung des Heizgases H an einem Ort erfolgen, welcher stromaufwärts bezüglich aller insbesondere katalytisch wirksamen Abgasbehandlungseinheiten liegt. Sofern eine Abgasbehandlungseinheit beispielsweise einen SCR-Katalysator umfasst und insofern auch die Eingabe eines Reaktionsmittels R in den Abgasstrom erforderlich ist, kann der dafür vorgesehene Injektor auch an anderer Stelle positioniert sein, als in den Figuren dargestellt. Beispielsweise könnte auch dieser stromabwärts bezüglich der Anschlusseinheit positioniert sein. Dies ermöglicht es auch, einen dem Injektor zugeordneten Mischer, welcher die Durchmischung von Reaktionsmittel und Brennkraftmaschinenabgas unterstützen soll, durch das Heizgas H zu erwärmen und dadurch die Verdampfung des Reaktionsmittels R zu unterstützen.

## Patentansprüche

1. Anschlusseinheit zum Anschließen einer Heizgas-Erzeugungsanordnung (32) zur Erzeugung von in einen Abgasströmungskanal (28) in einer Abgasführungskomponente (12) einer Abgasanlage (10) für eine Brennkraftmaschine einzuleitendem Heizgas (H) an die Abgasführungskomponente (12), umfassend einen mit
- einer einen Heizgas-Strömungskanal (40) umgebenden Umfangswand (38),
- einem an einer Komponentenwand (50) der Abgasführungskomponente (12) zu befestigenden Befestigungsbereich (42) und
- einem Anschlussbereich (60) zum Anschließen der Heizgas-Erzeugungsanordnung (32) an die Anschlusseinheit (34)
einstückig ausgebildeten Anschlusseinheitkörper (36), wobei der Befestigungsbereich (42) einen von der Umfangswand (38) bezüglich einer Anschlusseinheitkörper-Mittenachse (M) nach radial außen hervorstehenden Befestigungsflansch (56) mit einer daran ausgebildeten ringförmigen Befestigungsfläche (58) umfasst und der Anschlussbereich (60) einen von der Umfangswand (38) bezüglich der Anschlusseinheitkörper-Mittenachse (M) nach radial außen hervorstehenden Anschlussflansch (62) mit einer daran ausgebildeten ringförmigen Anschlussfläche (64) umfasst, wobei an dem Anschlusseinheitkörper (36) ein an die Umfangswand (38) anschließendes oder/und von der Umfangswand (38) wenigstens bereichsweise umgebenes, den Heizgas-Strömungskanal (40) wenigstens bereichsweise bereitstellendes Heizgas-Einleitrohr (68) vorgesehen ist, wobei der Anschlusseinheitkörper (36) mit dem Heizgas-Einleitrohr (68) einstückig ausgebildet ist.

2. Anschlusseinheit nach Anspruch 1, **dadurch gekennzeichnet, dass** der Anschlusseinheitkörper (36) als Metallgusskörper ausgebildet ist.

3. Anschlusseinheit nach Anspruch 1 oder 2, **dadurch gekennzeichnet, dass** die Anschlussfläche (64) bezüglich der Anschlusseinheitkörper-Mittenachse (M) in einem stromaufwärtigen Endbereich des Heizgas-Strömungskanals (40) im Wesentlichen orthogonal angeordnet ist, oder/und dass die Befestigungsfläche (58) bezüglich der Anschlusseinheitkörper-Mittenachse (M) im stromaufwärtigen Endbereich des Heizgas-Strömungskanals (40) unter einem von 90° verschiedenen Winkel geneigt ist.

4. Anschlusseinheit nach einem der Ansprüche 1-3, **dadurch gekennzeichnet, dass** die Anschlussfläche (64) im Wesentlichen in einer Ebene liegt, oder/und dass die Befestigungsfläche (58) im Wesentlichen in einer Ebene liegt.

5. Anschlusseinheit einem der Ansprüche 1-4, **dadurch gekennzeichnet, dass** ein Radialabstand der Umfangswand (38) zu der Anschlusseinheit-Mittenachse (M) von dem Anschlussflansch (62) in Richtung zu dem Befestigungsflansch (56) zunimmt, oder/und dass die Anschlussfläche (64) kleiner ist als die Befestigungsfläche (58).

6. Anschlusseinheit nach einem der Ansprüche 1-5, **dadurch gekennzeichnet, dass** in dem Heizgas-Einleitrohr (68) eine Mehrzahl von Heizgas-Abgabeöffnungen (70) ausgebildet ist.

7. Abgasanlage für eine Brennkraftmaschine, umfassend:
- eine Abgasführungskomponente (12) mit einer einen von Brennkraftmaschinenabgas (A) durchströmbaren Abgasströmungskanal (28) umgrenzenden Komponentenwand (50),
- eine Heizgas-Erzeugungsanordnung (32) zur Erzeugung von in den Abgasströmungskanal (28) einzuleitendem Heizgas (H),
- eine Anschlusseinheit (34) nach einem der Ansprüche 1-6 zum Anschließen der Heizgas-Erzeugungsanordnung (32) an die Komponentenwand (50) derart, dass von der Heizgas-Erzeugungsanordnung (32) erzeugtes Heizgas (H) durch die Anschlusseinheit (34) in den Abgasströmungskanal (28) strömt.

8. Abgasanlage nach Anspruch 7, **dadurch gekennzeichnet, dass** der Befestigungsbereich (42) mit seiner Befestigungsfläche (58) einen eine Heizgas-Einleitöffnung (52) in der Komponentenwand (50) umgebenden Öffnungsrandbereich (54) der Komponentenwand (50) überdeckend angeordnet ist.

9. Abgasanlage nach Anspruch 7 oder 8, **dadurch gekennzeichnet, dass** der Befestigungsflansch (56) mit der Komponentenwand (50) durch Materialschluss, vorzugsweise Verschweißen, verbunden ist.

10. Abgasanlage nach einem der Ansprüche 7-9, **dadurch gekennzeichnet, dass** die Komponentenwand (50) ein Stahlblech-Umformteil umfasst.

11. Abgasanlage nach einem der Ansprüche 7-10, **dadurch gekennzeichnet, dass** die Abgasführungskomponente (12) ein Umlenkgehäuse zum Umlenken eines den Abgasströmungskanal (28) durchströmenden Abgasstroms zwischen einem stromaufwärtigen Anschlussbereich (14) und einem stromabwärtigen Anschlussbereich (18) desselben bereitstellt, oder/und dass die Abgasführungskomponente (12) in dem stromaufwärtigen Anschlussbereich (14) an eine stromaufwärtige Abgasbehandlungseinheit (16) angeschlossen ist und in dem stromabwärtigen Anschlussbereich (18) an eine stromabwärtige Abgasbehandlungseinheit (20) angeschlossen ist.

## Claims

1. A connection unit for connecting a heating gas generating arrangement (32) for generating heating gas (H), which is to be introduced into an exhaust gas flow duct (28) in an exhaust gas conducting component (12) of an exhaust system (10) for an internal combustion engine, to the exhaust gas conducting component (12), comprising a connection unit body (36) formed integrally with
- a circumferential wall (38) surrounding a heating gas flow duct (40),
- a fastening region (42) to be fastened to a component wall (50) of the exhaust gas conducting component (12), and
- a connection region (60) for connecting the heating gas generating arrangement (32) to the connection unit (34),
wherein the fastening region (42) comprises a fastening flange (56) protruding radially outward from the circumferential wall (38) with respect to a connection unit body center axis (M) and having an annular fastening surface (58) formed on said fastening flange, and the connection region (60) comprises a connection flange (62) protruding radially outward from the circumferential wall (38) with respect to the connection unit body center axis (M) and having an annular connection surface (64) formed on said connection flange, wherein a heating gas inlet pipe (68) which is connected to the circumferential wall (38) or/and is at least partially surrounded by the circumferential wall (38) and at least partially provides the heating gas flow duct (40) is provided on the connection unit body (36), wherein the connection unit body (36) is formed integrally with the heating gas inlet pipe (68).

2. The connection unit as claimed in claim 1, **characterized in that** the connection unit body (36) is in the form of a metal cast body.

3. The connection unit as claimed in claim 1 or 2, **characterized in that** the connection surface (64) is arranged substantially orthogonally with respect to the connection unit body center axis (M) in an upstream end region of the heating gas flow duct (40), or/and **in that** the fastening surface (58) is inclined at an angle different from 90° with respect to the connection unit body center axis (M) in the upstream end region of the heating gas flow duct (40).

4. The connection unit as claimed in any one of claims 1-3, **characterized in that** the connection surface (64) lies substantially in one plane, or/and **in that** the fastening surface (58) lies substantially in one plane.

5. The connection unit as claimed in any one of claims 1-4, **characterized in that** a radial distance of the circumferential wall (38) to the connection unit center axis (M) from the connection flange (62) increases in the direction of the fastening flange (56), or/and **in that** the connection surface (64) is smaller than the fastening surface (58).

6. The connection unit as claimed in any one of claims 1 to 5, **characterized in that** a plurality of heating gas discharge openings (70) are formed in the heating gas inlet pipe (68).

7. An exhaust system for an internal combustion engine, comprising:
- an exhaust gas conducting component (12) with a component wall (50) surrounding an exhaust gas flow duct (28) through which internal combustion engine exhaust gas (A) can flow,
- a heating gas generating arrangement (32) for generating heating gas (H) to be introduced into the exhaust gas flow duct (28),
- a connection unit (34) as claimed in any one of claims 1-6 for connecting the heating gas generating arrangement (32) to the component wall (50) in such a way that heating gas (H) generated by the heating gas generating arrangement (32) flows through the connection unit (34) into the exhaust gas flow duct (28).

8. The exhaust system as claimed in claim 7, **characterized in that** the fastening region (42) is arranged with its fastening surface (58) covering an opening edge region (54) of the component wall (50), the opening edge region surrounding a heating gas inlet opening (52) in the component wall (50).

9. The exhaust system as claimed in any one of claims 7 or 8, **characterized in that** the fastening flange (56) is connected to the component wall (50) by means of a material bond, preferably welding.

10. The exhaust system as claimed in any one of claims 7 to 9, **characterized in that** the component wall (50) comprises a sheet steel formed part.

11. The exhaust system as claimed in any one of claims 7 to 10, **characterized in that** the exhaust gas conducting component (12) provides a deflection housing for deflecting an exhaust gas flow flowing through the exhaust gas flow duct (28) between an upstream connection region (14) and a downstream connection region (18) thereof, or/and **in that** the exhaust gas conducting component (12) is connected to an upstream exhaust gas treatment unit (16) in the upstream connection region (14) and is connected to a downstream exhaust gas treatment unit (20) in the downstream connection region (18).

## Revendications

1. Une unité de raccordement destinée à raccorder un dispositif de géneration de gaz de chauffage (32), servant à produire du gaz de chauffage (H) devant être introduit dans un conduit d'écoulement des gaz d'échappement (28) au sein d'un composant de conduite des gaz d'échappement (12) d'un système d'échappement (10) pour un moteur à combustion interne, au composant de conduite des gaz d'échappement (12), comprenant un corps d'unité de raccordement (36) formé d'un seul tenant avec
- une paroi périphérique (38) entourant un conduit d'écoulement de gaz de chauffage (40),
- une zone de fixation (42) destinée à être fixée à une paroi de composant (50) du composant de conduite des gaz d'échappement (12), et
- une zone de raccordement (60) destinée à raccorder le dispositif de génération de gaz de chauffage (32) à l'unité de raccordement (34),
dans lequel la zone de fixation (42) comprend une bride de fixation (56) faisant saillie radialement vers l'extérieur à partir de la paroi circonférentielle (38) par rapport à un axe central du corps d'unité de raccordement (M) et comportant une surface de fixation annulaire (58) formée sur ladite bride de fixation, et la zone de raccordement (60) comprend une bride de raccordement (62) faisant saillie radialement vers l'extérieur à partir de la paroi circonférentielle (38) par rapport à l'axe central du corps d'unité de raccordement (M) et comportant une surface de raccordement annulaire (64) formée sur ladite bride de raccordement, dans laquelle un tuyau d'entrée de gaz de chauffage (68), qui est raccordé à la paroi circonférentielle (38) ou/et est au moins partiellement entouré par la paroi circonférentielle (38) et constitue au moins partiellement le conduit d'écoulement de gaz de chauffage (40), est prévu sur le corps d'unité de raccordement (36), dans lequel le corps d'unité de raccordement (36) est formé d'un seul tenant avec le tuyau d'entrée de gaz de chauffage (68).

2. L'unité de raccordement selon la revendication 1, **caractérisée en ce que** le corps d'unité de raccordement (36) se présente sous la forme d'un corps moulé en métal.

3. L'unité de raccordement selon la revendication 1 ou 2, **caractérisée en ce que** la surface de raccordement (64) est disposée sensiblement orthogonalement par rapport à l'axe central du corps d'unité de raccordement (M) dans une région d'extrémité amont du conduit d'écoulement de gaz de chauffage (40), ou/et **en ce que** la surface de fixation (58) est inclinée d'un angle différent de 90° par rapport à l'axe central du corps d'unité de raccordement (M) dans la région d'extrémité amont du conduit d'écoulement de gaz de chauffage (40).

4. L'unité de raccordement selon l'une quelconque des revendications 1 à 3, **caractérisée en ce que** la surface de raccordement (64) se trouve sensiblement dans un plan, ou/et **en ce que** la surface de fixation (58) se trouve sensiblement dans un plan.

5. L'unité de raccordement selon l'une quelconque des revendications 1 à 4, **caractérisée en ce que** la distance radiale entre la paroi circonférentielle (38) et l'axe central du corps d'unité de raccordement (M), à partir de la bride de raccordement (62), augmente en direction de la bride de fixation (56), et/ou **en ce que** la surface de raccordement (64) est plus petite que la surface de fixation (58).

6. L'unité de raccordement selon l'une quelconque des revendications 1 à 5, **caractérisée en ce qu'**une pluralité d'orifices d'évacuation de gaz de chauffage (70) sont formés dans le tuyau d'entrée de gaz de chauffage (68).

7. Un système d'échappement pour un moteur à combustion interne, comprenant :
- un composant de conduite des gaz d'échappement (12) avec une paroi de composant (50) entourant un conduit d'écoulement des gaz d'échappement (28) à travers lequel les gaz d'échappement (A) du moteur à combustion interne peuvent s'écouler,
- un dispositif de génération de gaz de chauffage (32) destiné à générer du gaz de chauffage (H) à introduire dans le conduit d'écoulement des gaz d'échappement (28),
- une unité de raccordement (34) selon l'une quelconque des revendications 1 à 6 pour raccorder le dispositif de génération de gaz de chauffage (32) à la paroi de composant (50) de telle sorte que le gaz de chauffage (H) généré par le dispositif de génération de gaz de chauffage (32) s'écoule à travers l'unité de raccordement (34) dans le conduit d'écoulement des gaz d'échappement (28).

8. Le système d'échappement selon la revendication 7, **caractérisé en ce que** la zone de fixation (42) est agencée de telle sorte que sa surface de fixation (58) recouvre une zone de bord d'ouverture (54) de la paroi de composant (50), la zone de bord d'ouverture entourant une ouverture d'entrée de gaz de chauffage (52) dans la paroi de composant (50).

9. Le système d'échappement selon l'une quelconque des revendications 7 ou 8, **caractérisé en ce que** la bride de fixation (56) est reliée à la paroi de composant (50) au moyen d'une liaison matérielle, de préférence par soudage.

10. Le système d'échappement selon l'une quelconque des revendications 7 à 9, **caractérisé en ce que** la paroi de composant (50) comprend une pièce formée en tôle d'acier.

11. Le système d'échappement selon l'une quelconque des revendications 7 à 10, **caractérisé en ce que** le composant de conduite des gaz d'échappement (12) comporte un boîtier de déviation destiné à dévier un flux de gaz d'échappement s'écoulant à travers le conduit d'écoulement des gaz d'échappement (28) entre une zone de raccordement amont (14) et une zone de raccordement aval (18) de celui-ci, ou/et **en ce que** le composant de conduite des gaz d'échappement (12) est raccordé à une unité de traitement des gaz d'échappement amont (16) dans la zone de raccordement amont (14) et est raccordé à une unité de traitement des gaz d'échappement aval (20) dans la zone de raccordement aval (18).
